# EUROPÄISCHE PATENTSCHRIFT

(11) **EP 1 890 574 B1**
(45) Veröffentlichungstag und Bekanntmachung des Hinweises auf die Patenterteilung: **12.03.2014**
(21) Anmeldenummer: 06761955.1
(22) Anmeldetag: 31.05.2006
(51) Int. Cl.: A47C 7/46, B60N 2/66

(54) **LORDOSENSTÜTZE**
LUMBAR SUPPORT
SUPPORT LOMBAIRE

(30) Priorität: 16.06.2005 DE 102005027922
(43) Veröffentlichungstag der Anmeldung: 27.02.2008
(73) Patentinhaber: Schukra Gerätebau GmbH, 2560 Berndorf (AT)
(72) Erfinder: MAIERHOFER, Gunter, 14532 Stahnsdorf (DE); STÖSSEL, Veit, 90409 Nürnberg (DE); JUNKER, Klaus, 86911 Diessen am Ammersee (DE); PETZEL, Jan, 72074 Tübingen (DE)
(74) Vertreter: Banzer, Hans-Jörg
(86) Internationale Anmeldenummer: PCT/EP2006/005205
(87) Internationale Veröffentlichungsnummer: WO 2006/133809

(56) Entgegenhaltungen:
- WO-A-99/55200
- AU-B2- 670 508
- DE-A1- 10 243 617
- DE-A1- 19 825 225
- US-A1- 2004 075 320

## Beschreibung

Die vorliegende Erfindung betrifft eine Lordosenstütze für eine Sitzlehne. Die Erfindung betrifft insbesondere eine Lordosenstütze, wie sie in Rückenlehnen von Kraftfahrzeugsitzen, Büromöbelsitzen oder Wohnmöbelsitzen eingebaut ist.

Derartige Lordosenstützen werden in Sitzlehnen eingebaut, um durch Bildung einer entsprechenden Auflagefläche eine ausreichende Unterstützung im Lendenwirbel- oder Lordosenbereich einer auf dem Sitz sitzenden Person bereitzustellen. Dabei weist die Lordosenstütze in der Regel einen Lordosenstützkorb auf, der an einem Rahmen befestigt ist, der in der Sitzlehne angeordnet ist. Mit Hilfe einer Verstellvorrichtung kann üblicherweise die Krümmung oder Wölbung des Lordosenstützkorbs eingestellt werden, wobei dies manuell oder elektrisch erfolgen kann. Mit Hilfe der Verstellvorrichtung kann die auf dem Sitz sitzende Person die Stützung des Rückens durch die Lordosenstütze individuell auf ihre Bedürfnisse angepasst einstellen.

Aus der DE 102 13 377 A1 ist eine Sitzlehne mit einer Lordosenstütze bekannt, bei der zur Einstellung des Krümmungsverhaltens der Lordosenstütze eine Verstelleinrichtung vorgesehen ist, die zur Einwirkung auf die Lordosenstütze einen um eine Schwenkachse drehbar gelagerten, mit einer gekrümmten Betätigungsfläche versehenen Kurvenkörper aufweist. Durch ein derartiges System kann jedoch die Wölbung des Lordosenstützkorbs und damit der Sitzlehne nur in engen Grenzen variiert werden. Weiterhin ist mit einem derartigen System die Stützung des unteren Lendenwirbelbereichs nicht optimal möglich.

Die Druckschrift DE 198 25 225 A1 offenbart eine Lordosenstütze gemäß dem Oberbegriff des Anspruchs 1. Darüber hinaus ist aus der Druckschrift DE 102 43 617 A1 eine Lordosenstütze mit einem Lordosenstützkorb, welcher entlang der Längsrichtung einer Sitzlehne anzuordnen ist, bekannt, wobei die Lordosenstütze eine Verstellvorrichtung aufweist, um die Wölbung des Lordosenstützkorbs relativ zu einem Rahmen, an dem der Lordosenstützkorb angebracht ist, zu verstellen. Eine ähnliche Lordosenstütze ist auch aus der Druckschrift US 2004/075320 A1 bekannt.

Die Druckschrift WO 99/55200 A1 offenbart eine weitere verstellbare Lordosenstütze für eine Sitzlehne, wobei die Lordosenstütze einen Lordosenstützkorb aufweist, dessen Wölbung einstellbar ist.

Es ist Aufgabe der vorliegenden Erfindung, eine Lordosenstütze bereitzustellen, bei der die Wölbung variabler eingestellt werden kann, wodurch die Lordosenstütze individueller an verschiedene Körpergeometrien der auf dem Sitz sitzenden Person angepasst werden kann. Weiterhin soll der untere Bereich der Lendenwirbelsäule ideal gestützt werden.

Diese Aufgabe wird erfindungsgemäß durch eine Lordosenstütze mit den Merkmalen des unabhängigen Anspruchs 1 gelöst. Die abhängigen Ansprüche definieren bevorzugte oder vorteilhafte Ausführungsformen der Erfindung.

Nachfolgend wird die Erfindung unter Bezugnahme auf die schematischen beiliegenden Zeichnungen näher erläutert. Hierbei zeigen:
die Figuren 1 und 2 die schematische Darstellung einer Lordosenstütze in Ruheposition bzw. in gewölbter Position, die keinen Teil der Erfindung bildet,
die Figuren 3 und 4 eine Lordosenstütze gemäß der Erfindung in Ruheposition bzw. in gewölbter Position,
Figur 5 die Verstellvorrichtung der Erfindung im gewölbten Zustand,
Figur 6 die Verstellvorrichtung von Figur 5 in Ruheposition,
die Figuren 7a und 7b ein Verstellelement der Verstellvorrichtung im gekrümmten und ungekrümmten Zustand in einer perspektivischen Aufsicht,
die Figuren 8a und 8b ein Verstellelement in einer perspektivischen Ansicht im gekrümmten und ungekrümmten Zustand,
Figur 9 die gesamte Lordosenstütze in einer perspektivischen Ansicht von hinten mit ausgefahrenem Lordosenstützkorb, und
Figur 10 in perspektivischer Ansicht die Lordosenstütze im nicht ausgefahrenen Zustand.

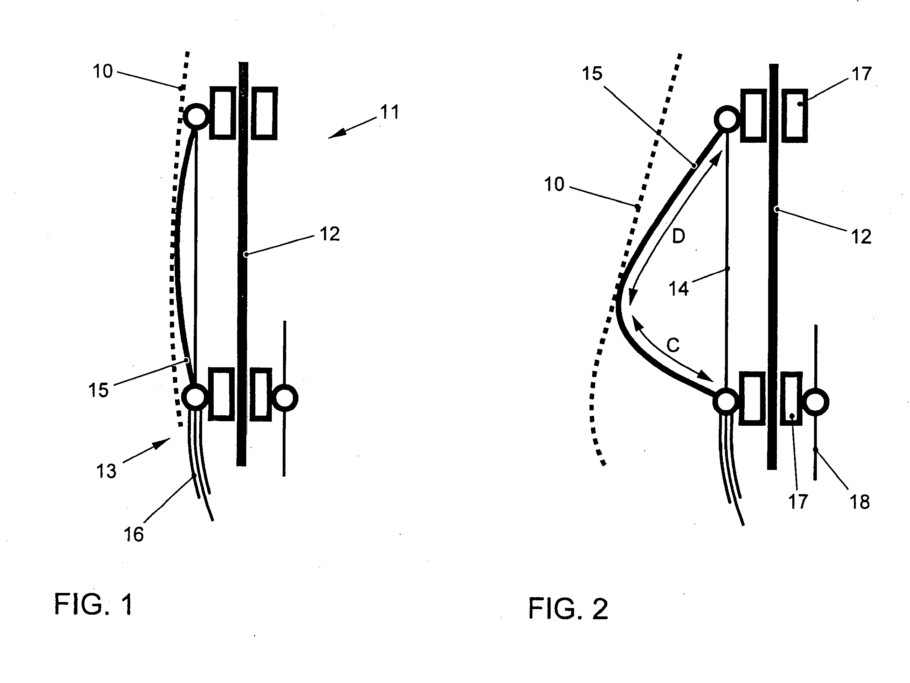

Die Figuren 1 und 2 zeigen schematisch eine Lordosenstütze. Die Lordosenstütze weist einen gestrichelt dargestellten Lordosenstützkorb 10 auf, der in eine nicht dargestellte Sitzlehne eines Sitzes eingebaut ist. Weiterhin ist eine Verstellvorrichtung 11 vorgesehen, die an einem Rahmen 12 angebracht ist, mit der der Lordosenstützkorb 10 bewegt werden kann. In der in Figur 1 dargestellten Ausführungsform litt der Lordosenstützkorb 10 im Wesentlichen ungefähr parallel zum Rahmen 12. In dieser Position bildet er keine gesonderte Stütze des unteren Rückenbereichs der auf dem Sitz befindlichen Person. Der Rahmen 12 definiert die Längsrichtung der Sitzlehne.

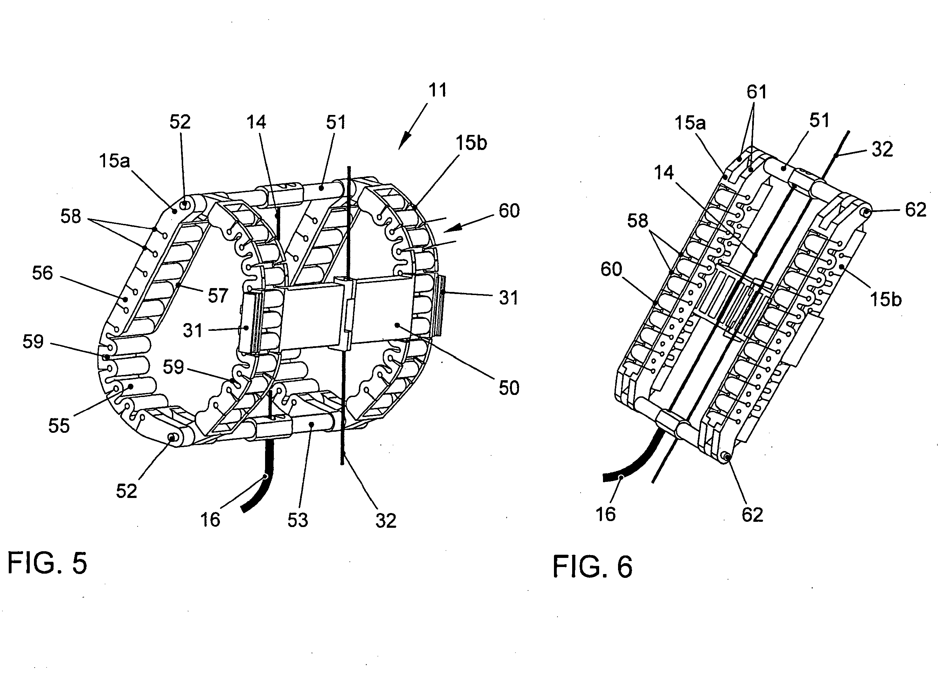

Bei der in Figur 2 dargestellten Position hat die Verstellvorrichtung 11 den Lordosenstützkorb 10 nach vorne gedrückt. Die Verstellvorrichtung wird durch einen Bowdenzug 13 betätigt, wobei das Kabel 14 des Bowdenzugs an dem oberen Ende eines Verstellelements 15 der Verstellvorrichtung 12 befestig ist. Die Hülse 16 in der das Kabel 14 geführt ist, ist an dem unteren Ende des Verstellelements 15 angebracht. Bei Zug am Bowdenkabel 14 bewegen sich das obere und untere Ende des Verstellelements 15 aufeinander zu, so dass das Verstellelement 15, wie in Figur 2 dargestellt, konvex gekrümmt wird, und so den Lordosenstützkorb 10 an seinem unteren Ende nach außen drückt. Bei der in Figur 1 und 2 dargestellten Ausführungsform sind die Enden des Verstellelements 15 jeweils in Führungen 17 am Rahmen 12 geführt, so dass sie sich bei Betätigung des Zugkabels 14 aufeinander zu bewegen können. Weiterhin kann die gesamte Verstellvorrichtung 11 in der Höhe entlang dem Rahmen 12 mit einem schematisch dargestellten Bowdenzug 18 bewegt werden. Die Verstellvorrichtung 11 kann folglich mit unabhängigen Mechanismen gewölbt und höhenverstellt werden. Wie später im Zusammenhang mit den Figuren 5 bis 8 näher erklärt werden wird, kann das Verstellelement 15 derart ausgebildet sein, dass ein oberer Abschnitt d relativ gering gekrümmt ist, während ein unterer Abschnitt C stärker gekrümmt ist. Dadurch kann ein unterer Rückenbereich der auf einem Sitz befindlichen Person besser gestützt werden, wenn die Sitzlehne des nicht gezeigten Sitzes, wie in den Figuren 1 und 2 gezeigt, ausgebildet ist.

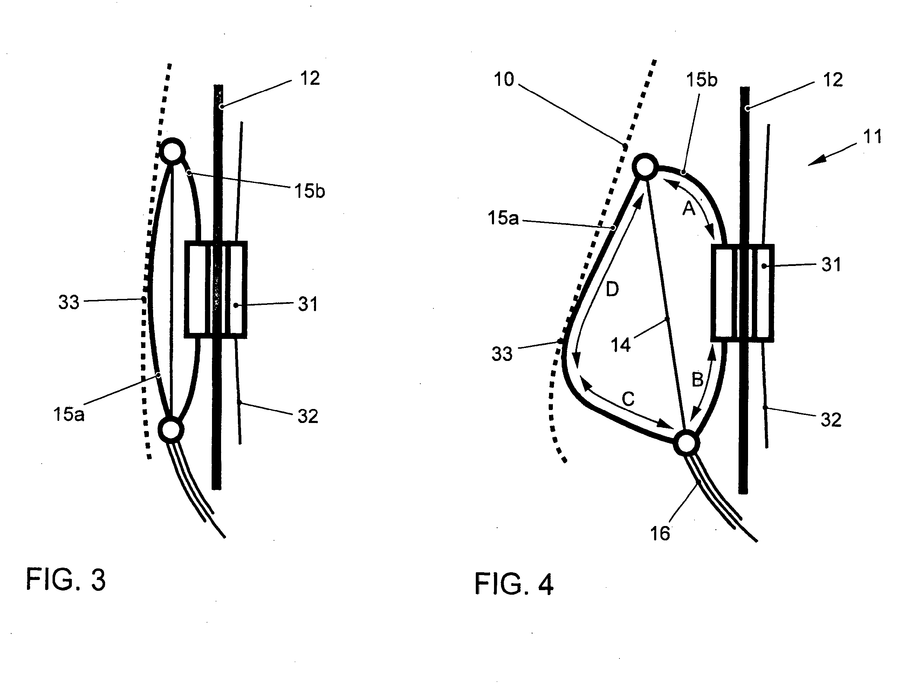

In den Figuren 3 und 4 ist eine bevorzugte Ausführungsform einer Lordosenstütze dargestellt. In dieser Ausführungsform weist die Verstellvorrichtung 11 zwei verschiedene Verstellelemente 15a und 15b auf, die jeweils an ihren Enden miteinander verbunden sind. Diese Enden sind, wie in den Figuren 1 und 2 jeweils mit dem Zugkabel 14 bzw. der Hülse 16 des Bowdenzugs verbunden. In der dargestellten Ausführungsform ist das hintere Verstellelement 15b mit einer Führung 31 am Rahmen 12 angebracht. Die Führung 31 ist mit Hilfe eines weiteren Bowdenzugs, von dem das Zugkabel 32 dargestellt ist, in der Höhe entlang des Rahmens verstellbar. Wie in Figur 4 zu erkennen ist verformt sich die Verstellvorrichtung 11 bei Zug am Kabel 14 derart, dass das Verstellelement 15a sich konvex verformt, während sich das Verstellelement 15b konkav verformt. Durch die Verformung der beiden Verstellelemente 15a, 15b kann eine relativ starke Wölbung der Verstellvorrichtung 11 erreicht werden, wodurch der Lordosenstützkorb 10 an seinem unteren freien Ende in Richtung des Rückens der auf dem Sitz sitzenden Person bewegt wird.

Bei der in Figur 4 dargestellten Ausführungsform ist das Verstellelement 15b derart ausgebildet, dass ein oberer Abschnitt A relativ stark gekrümmt wird, während ein unterer Abschnitt B des Verstellelements 15b nur gering gekrümmt wird. Dadurch ist es möglich, den Wölbungsscheitelpunkt 33 durch Betätigen des Bowdenzugs weiter nach unten und vorne zu legen, wodurch es möglich ist, den unteren Lendenbereich des Rückens noch stärker zu führen. Selbstverständlich können die Abschnitte A, B, C und D der Verstellelemente auch derart ausgebildet sein, dass sie sich alle gleichmäßig krümmen, so dass sich der Wölbscheitelpunkt 33 nur nach vorne und nicht nach unten bewegen würde.

In Figur 5 ist die Verstellvorrichtung 11 perspektivisch von hinten dargestellt. Die Verstellvorrichtung 11 ist durch das hintere Verstellelement 15b über eine Führungsplatte 50, die die beiden Führungen 31 verbindet, mit dem nicht dargestellten Rahmen verbunden. Mit dem Kabel 32 des nicht dargestellten Bowdenzugs kann die gesamte Verstellvorrichtung in der Höhe nach oben oder unten verstellt werden.

Weiterhin ist erkennbar, dass die beiden Verstellelemente 15a und 15b durch eine obere Verbindungsstange 51 miteinander verbunden sind. Diese Verbindungsstange 51 weist eine Welle 52 auf, wodurch die beiden Enden der Verstellelemente 15a, 15b miteinander verbunden sind. An der Verbindungsstange ist weiterhin das Bowdenkabel 14 befestigt.

Auf ähnliche Weise sind die beiden unteren Enden der beiden Verstellelemente 15a, 15b durch eine untere Verbindungsstange 53 mit der Welle 52 verbunden, an der auch die Hülse 16 des Bowdenzugs befestigt ist. Bei Betätigen des Bowdenzugs wird die Stange 51 in Richtung der Stange 53 gezogen, so dass sich die Verstellelemente 15 verkrümmen.

Wie in den Figuren 5 und 6 zu erkennen ist, sind die Verstellelemente als wellenförmiges Band 55 ausgebildet. Dieses Band ist an seinen Seitenkanten jeweils von einem Steg 56 und einem Steg 57 begrenzt. Dieser Steg kann Einschnitte 58 an der einen Kante des Stegs 56 und Aussparungen 59 an der anderen Kante des Stegs aufweisen. Die Aussparungen sind an.der Krümmungsinnenseite des Stegs ausgebildet, damit bei Betätigen des Bowdenkabels 14 das Verstellelement verkrümmt werden kann. An der Außenseite sind die Einschnitte 58 vorgesehen, um die Krümmung des Verstellelements 15 bzw. die Bewegung der einzelnen Verstellglieder 60 relativ zueinander zu ermöglichen.

Wie in Figur 5 zu erkennen ist, sind in einem unteren Abschnitt des Verstellelements 15a mehrere Verstellglieder 60 relativ zueinander beweglich, da die Aussparungen 59 vorgesehen sind. Hierdurch krümmt sich dieser Abschnitt des Verstellelements 15a stärker als der obere Abschnitt des Verstellelements 15a, bei dem die Aussparungen 59 nicht auf der Innenseite vorgesehen sind, so dass die Bewegung der einzelnen Verstellglieder 60 relativ zueinander in dem oberen Abschnitt nicht möglich ist. Bei einem Vergleich mit Figur 4 wird deutlich, dass der untere Abschnitt dem Abschnitt C entspricht, während der obere Abschnitt dem Abschnitt D entspricht.

Bei dem Verstellelement 15b ist dies in der dargestellten Ausführungsform umgekehrt, wobei in einem unteren Abschnitt des Verstellelements 15b die Aussparungen 59 in einem unteren Bereich weniger vorhanden sind als in einem oberen Bereich, so dass der untere Bereich weniger stark gekrümmt wird als der obere Bereich des Verstellelements 15b. Bei einem Vergleich mit Figur 4 erkennt man, dass der untere Bereich dem Abschnitt B entspricht und der obere Bereich dem Abschnitt A entspricht.

Zusammenfassend ist festzuhalten, dass durch die Ausbildung des Stegs, insbesondere durch die Wahl der Einschnitte und Aussparungen das Krümmungsverhalten der Verstellelemente festgelegt werden kann. Bei der in Figur 5 dargestellten Wahl der Verstellelemente 15a und 15b wurde erreicht, dass der Wölbscheitelpunkt relativ weit nach unten verlegt wurde. Bei einer anderen Anordnung der Einschnitte und Aussparungen 58 und 59 ändert sich das Krümmungsverhalten der Verstellelemente 15 entsprechend.

In Figur 6 sind die beiden Verstellelemente 15a und 15b dargestellt, wenn das Zugkabel 14 des Bowdenzugs nicht gespannt wird. In dieser Ausführungsform liegen die beiden Verstellelemente 15a, 15b im Wesentlichen parallel übereinander.

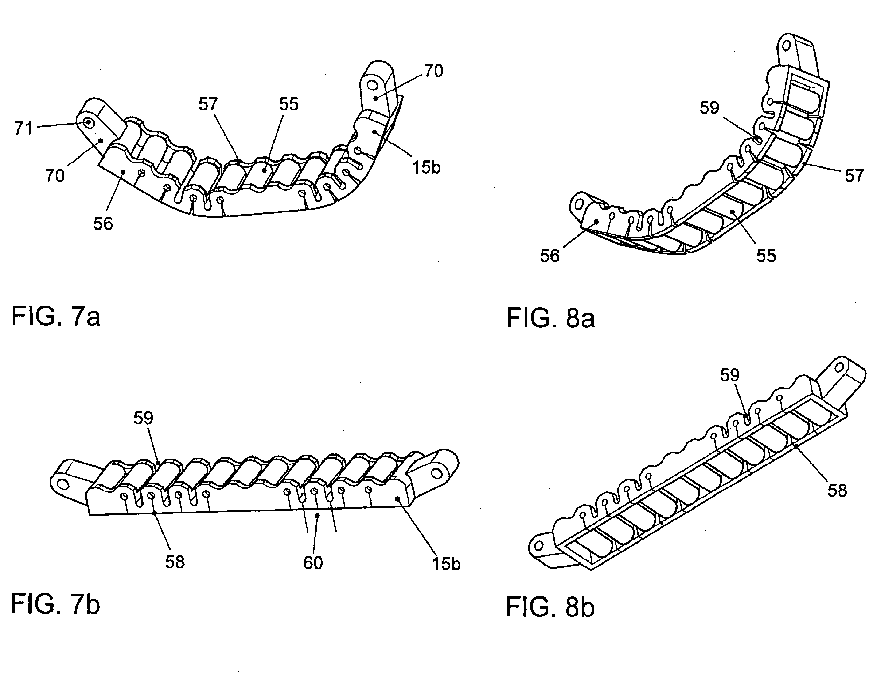

In den Figuren 7a und 7b ist das hintere Verstellelement 15b dargestellt. In Figur 7a ist die Form des Verstellelements dargestellt, wenn der Bowdenzug mit dem Bowdenkabel 14 betätigt wurde, in Figur 7b ist das Verstellelement 15b im nicht gekrümmten Zustand dargestellt. Wie ebenfalls in den Figuren 8a und 8b dargestellt ist, weist das Verstellelement ein wellenförmiges Band 55 auf, das von den Stegen 56, 57 begrenzt ist. Auf der Krümmungsinnenseite sind die Aussparungen 59 angeordnet, und an der anderen Kante sind Einschnitte 58 vorgesehen, um ein Verschieben von einzelnen Verstellgliedern 60 relativ zueinander zu ermöglichen. Die Aussparungen 59 auf der Krümmungsinnenseite sind notwendig, damit sich die einzelnen Verstellglieder zueinander bewegen können im Falle einer Krümmung. In einem Mittelabschnitt des Verstellelements 15b sind keine Einschnitte 58 und Aussparungen 59 vorgesehen, so dass sich die dortigen Verstellglieder nicht relativ zueinander bewegen können. Dieser Mittelabschnitt dient zur Befestigung an der Führungsplatte 50, wie in Figur 5 dargestellt, und damit zur Befestigung am Rahmen 12. An den beiden Enden des Verstellelements 15b ist jeweils ein Finger 70 mit einer Durchlassöffnung 71 angebracht, durch die die Welle 52 geschoben wird. Der Finger 70 des Verstellelements 15b wird hierbei zwischen die beiden Schenkel 61 des Verstellelements 15a (Figur 6) gelegt, wobei dann die beiden Verstellelemente 15a, 15b um die Achse 62 beweglich angeordnet sind.

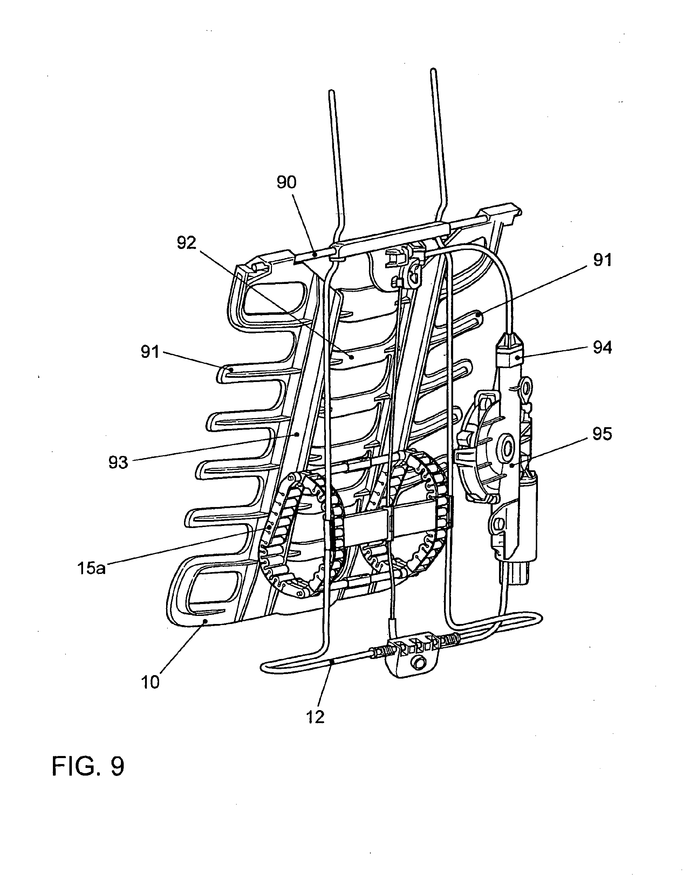

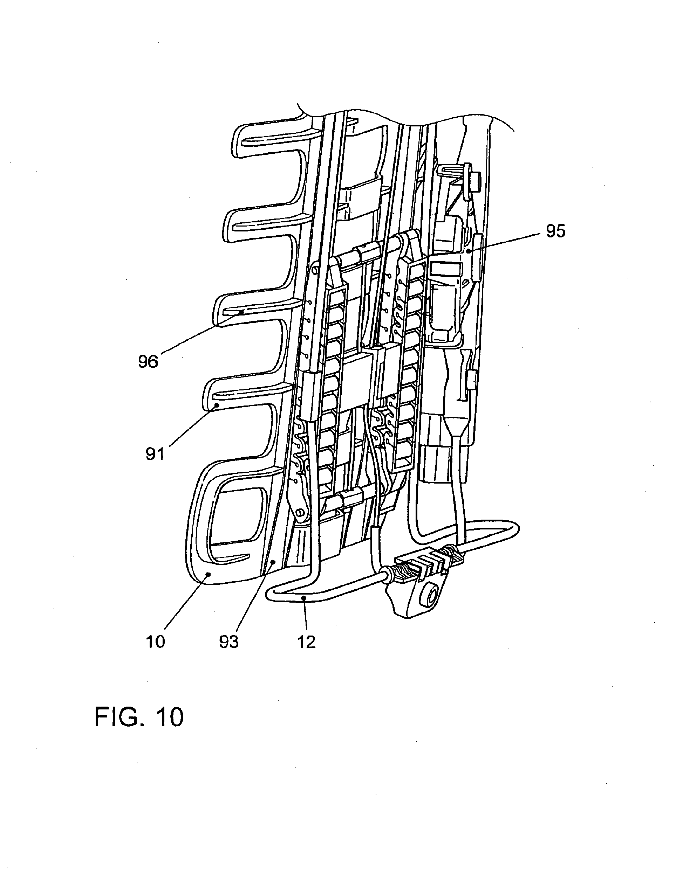

In den Figuren 9 und 10 ist die Lordosenstütze in einer perspektivischen Ansicht dargestellt, wobei der Lordosenstützkorb in Figur 9 den unteren Lendenbereich stützend dargestellt ist, während in Figur 10 der Lordosenstützkorb 10 am Rahmen 12 anliegt.

Das obere Ende des Lordosenstützkorbs ist an einer Querstrebe 90 des Rahmens schwenkbar angebracht. Der Lordosenstützkorb weist kammartige Finger 91 auf, die durch einen Verbindungssteg 92 miteinander verbunden sind. In Längsrichtung des Rahmens 12 weist der Lordosenstützkorb 2 an seiner Hinterseite Spurrillen 93 auf, die von der Größe derart ausgebildet sind, dass jeweils das vordere Verstellelement 15a an einer Rille 93 entlanggleiten kann, wenn die Verstellvorrichtung 11 durch einen Bowdenzug 94 in der Höhe verstellt wird. Der Bowdenzug 94 weist einen Aktuator 95 auf, mit dem die Verstellvorrichtung 11 in der Höhe verändert werden kann. Der Bowdenzug 94 dessen Betätigung nicht dem Aktuator und dessen Befestigung am Rahmen 12 entspricht dem Stand der Technik, so dass hier nicht weiter darauf eingegangen werden muss.

Der Bowdenzug zur Veränderung der Wölbung der Verstellvorrichtung 11 ist aus Übersichtlichkeitsgründen nicht dargestellt.

Der Lordosenstützkorb 10 weist an seiner hinteren Seite an den Fingern Verstärkungsrippen 96 auf, um die Finger 91 zu verstärken. An der Unterseite sind die beiden letzten Finger des Stützkorbs 10 miteinander verbunden.

Durch die Tatsache, dass der Lordosenstützkorb an seinem unteren Ende nicht an dem Rahmen befestigt ist, kann er im unteren Bereich den unteren Rücken der auf dem Sitz sitzenden Person besser unterstützen. Weiterhin muss bei der Wahl des Materials des Lordosenstützkorbs nicht darauf geachtet werden, dass dieser, wie im Stand der Technik üblich, stark gewölbt wird, wenn das untere Ende am Rahen 12 befestigt ist. Die zum Rahmen gewandte Seite des Lordosenstützkorbs kann weiterhin eine derartige Materialbeschaffenheit haben, dass sich die Verstellvorrichtung leicht in den Rillen 93 bewegen lässt.

Zusammenfassend ermöglicht die vorliegende Erfindung eine Lordosenstütze, bei der die Wölbung ungleichmäßig verteilt werden kann, und bei der der Lordosenstützkorb den unteren Bereich der Wirbelsäule gut führen kann.

## Patentansprüche

1. Lordosenstütze für eine Sitzlehne,
mit einem Lordosenstützkorb (10), welcher entlang der Längsrichtung der Sitzlehne anzuordnen ist,
mit einem Rahmen (12), an dem der Lordosenstützkorb (10) angebracht ist, und
mit einer Verstellvorrichtung (11), um die Wölbung des Lordosenstützkorbs (10) relativ zu dem Rahmen (12) zu verstellen, wobei die Verstellvorrichtung (11) mehrere Verstellglieder (60) aufweist, die teilweise zueinander beweglich sind,
wobei die Verstellvorrichtung (11) mindestens ein Verstellelement (15, 15a, 15b) aufweist, welches die mehreren teilweise zueinander bewegliche Verstellglieder (60) aufweist und an seinen Enden in Führungen gelagert ist und derart mit einem Zugelement (14) gekoppelt ist, dass bei Betätigung des Zugelements (14) sich die Enden des mindestens einen Verstellelements (15, 15a, 15b) aufeinanderzubewegen können, um das mindestens eine Verstellelement (15, 15a, 15b) konvex zu krümmen, so dass das konvex gekrümmte mindestens eine Verstellelement (15, 15a, 15b) gegen eine Rückseite des Lordosenstützkorbs (10) drückt, um die Wölbung des Lordosenstützkorbs (10) einzustellen,
**dadurch gekennzeichnet,**
**dass** die Verstellvorrichtung zwei Verstellelemente (15, 15a, 15b) aufweist, die jeweils mehrere Verstellglieder (60) aufweisen, wobei die beiden Verstellelemente (15, 15a, 15b) jeweils an ihren Enden miteinander verbunden sind.

2. Lordosenstütze nach Anspruch 1,
**dadurch gekennzeichnet,**
**dass** die Verstellelemente (15, 15a, 15b) an ihren beiden Enden mit dem Zugelement (14) derart verbunden sind, dass durch dessen Betätigung die Lage der Verstellglieder (60) zueinander zumindest teilweise verändert wird.

3. Lordosenstütze nach Anspruch 2,
**dadurch gekennzeichnet,**
**dass** das Zugelement ein Bowdenzug ist, wobei das Zugkabel (14) des Bowdenzugs an einem Ende der Verstellelemente angebracht ist, und die Hülse (16) für das Zugkabel (14) am anderen Ende der Verstellelemente angebracht ist.

4. Lordosenstütze nach zumindest einem der vorhergehenden Ansprüche,
**dadurch gekennzeichnet,**
**dass** der Lordosenstützkorb (10) an einem seiner Enden am Rahmen (12) schwenkbar angebracht ist, wobei das zweite Ende frei bei Betätigen der Verstellvorrichtung (11) vom Rahmen wegschwenkt.

5. Lordosenstütze nach Anspruch 3,
**dadurch gekennzeichnet,**
**dass** die beiden einen Enden der Verstellelemente (15, 15a, 15b) mit dem Zugkabel des Bowdenzugs verbunden sind, während die beiden anderen Enden des Bowdenzugs mit der Hülse (16) des Bowdenzugs verbunden sind.

6. Lordosenstütze nach Anspruch 5,
**dadurch gekennzeichnet,**
**dass** bei Betätigung des Zugelements das eine Verstellelement (15b) konvex und das andere Verstellelement (15a) konkav gewölbt wird.

7. Lordosenstütze nach Anspruch 5 oder Anspruch 6,
**dadurch gekennzeichnet,**
**dass** eines der Verstellelemente (15b) derart am Rahmen (12) angebracht ist, dass beide Enden dieses Verstellelements beweglich relativ zum Rahmen angeordnet sind.

8. Lordosenstütze nach Anspruch 7,
**dadurch gekennzeichnet,**
**dass** sich das am Rahmen (12) angebrachte Verstellelement (15a) bei Betätigen des Zugelements konkav krümmt, das andere Verstellelement (15b) konvex.

9. Lordosenstütze nach Anspruch 7 oder 8,
**dadurch gekennzeichnet,**
**dass** die Verstellvorrichtung in Längsrichtung der Sitzlehne verschiebbar angeordnet ist.

10. Lordosenstütze nach einem der vorhergehenden Ansprüche,
**dadurch gekennzeichnet,**
**dass** die Verstellelemente (15a, 15b) im Wesentlichen parallel zu dem Rahmen (12) verlaufen, wenn die Verstellvorrichtung (11) in einer ersten Ruheposition liegt, in der der Lordosenstützkorb (10) im Wesentlichen parallel zum Rahmen (12) verläuft.

11. Lordosenstütze nach einem der vorhergehenden Ansprüche,
**dadurch gekennzeichnet,**
**dass** das Verstellelement (15a), das nicht am Rahmen (12) befestigt ist, derart ausgebildet ist, dass, vom freien Ende der Sitzlehne aus gesehen, in einem oberen Abschnitt des Verstellelements (15a) mehr Verstellglieder nicht zueinander beweglich sind als in einem unteren Abschnitt des Verstellelements (15a).

12. Lordosenstütze nach einem der vorhergehenden Ansprüche,
**dadurch gekennzeichnet,**
**dass** das Verstellelement (15b), das am Rahmen (12) befestigt ist, derart ausgebildet ist, dass, vom freien Ende der Sitzlehne aus gesehen, in einem oberen Abschnitt des Verstellelements (15b) mehr Verstellglieder zueinander beweglich sind als in einem unteren Abschnitt des Verstellelements (15b).

13. Lordosenstütze nach einem der vorhergehenden Ansprüche,
**dadurch gekennzeichnet,**
**dass** jedes Verstellelement (15, 15a, 15b) ein wellenförmiges Band (55) aufweist, das an den beiden Seitenkanten jeweils von einem Steg (56, 57) begrenzt ist.

14. Lordosenstütze nach Anspruch 13,
**dadurch gekennzeichnet,**
**dass** der Steg (56, 57) Einschnitte (58) und/oder Aussparungen (59) aufweist, die die Beweglichkeit der Verstellglieder (60) zueinander gewährleisten.

15. Lordosenstütze nach Anspruch 14,
**dadurch gekennzeichnet,**
**dass** die Einschnitte (58) auf der einen Kante des Stegs (56, 57) ausgebildet sind, und die Aussparungen (59) auf der anderen Kante des Stegs.

## Claims

1. A lumbar support for a seat backrest,
having a lumbar support basket (10) which is to be arranged along the longitudinal direction of the seat backrest, having a frame (12) to which the lumbar support basket (10) is attached, and
having an adjustment device (11) for adjusting the curvature of the lumbar support basket (10) relative to the frame (12), wherein the adjustment device (11) comprises a plurality of adjustment members (60) which are partly movable with respect to one another,
wherein the adjustment device (11) comprises at least one adjustment element (15, 15a, 15b) which comprises the plurality of adjustment members (60), which are partly movable with respect to one another, and which is supported in guides at its ends and is coupled to a pulling element (14) such that, upon actuation of the pulling element (14), the ends of the at least one adjustment element (15, 15a, 15b) can move towards one another so as to convexly curve the at least one adjustment element (15, 15a, 15b), so that the convexly curved at least one adjustment element (15, 15a, 15b) presses against a backside of the lumbar support basket (10) to adjust the curvature of the lumbar support basket (10),
**characterized in that**
the adjustment device comprises two adjustment elements (15, 15a, 15b) which each comprise a plurality of adjustment members (60), wherein both adjustment elements (15, 15a, 15b) are each connected at their ends with one another.

2. A lumbar support according to claim 1,
**characterized in that**
the adjustment elements (15, 15a, 15b) are connected at their both ends with the pulling element (14) such that its actuation changes the positions of at least some of the adjustment members (60) with respect to one another.

3. A lumbar support according to claim 2,
**characterized in that**
the pulling element is a Bowden cable, wherein the pulling cable (14) of the Bowden cable is attached to one end of the adjustment elements and the sleeve (16) for the pulling cable (14) is attached to the other end of the adjustment elements.

4. A lumbar support according to any one of the preceding claims,
**characterized in that**
the lumbar support basket (10) is pivotably attached at one of its ends to the frame (12), the second end swivelling freely away from the frame upon actuation of the adjustment device (11).

5. A lumbar support according to claim 3,
**characterized in that**
the both one ends of the adjustment elements (15, 15a, 15b) are connected with the pulling cable of the Bowden cable, while the both other ends of the Bowden cable are connected with the sleeve (16) of the Bowden cable.

6. A lumbar support according to claim 5,
**characterized in that**
the one adjustment element (15b) is convexly curved and the other adjustment element (15a) is concavely curved upon actuation of the pulling element.

7. A lumbar support according to claim 5 or claim 6,
**characterized in that**
one of the adjustment elements (15b) is attached to the frame (12) such that both ends of this adjustment element are arranged movably with respect to the frame.

8. A lumbar support according to claim 7,
**characterized in that**
the adjustment element (15a), which is attached to the frame (12), is curved concavely upon actuation of the pulling element, while the other adjustment element (15b) is curved convexly.

9. A lumbar support according to claim 7 or claim 8,
**characterized in that**
the adjustment device is arranged displaceably in the longitudinal direction of the seat backrest.

10. A lumbar support according to any one of the preceding claims,
**characterized in that**
the adjustment elements (15a, 15b) are disposed substantially parallel to the frame (12) when the adjustment device (11) is in a first rest position in which the lumbar support basket (10) is disposed substantially parallel to the frame (12).

11. A lumbar support according to any one of the preceding claims,
**characterized in that**
the adjustment element (15a) which is not fixed to the frame (12) is so configured that, viewed from the free end of the seat backrest, in an upper section of the adjustment element (15a) more adjustment members are not movable with respect to one another than in a lower section of the adjustment element (15a).

12. A lumbar support according to any one of the preceding claims,
**characterized in that**
the adjustment element (15b) which is fixed to the frame (12) is so configured, viewed from the free end of the seat backrest, that, in an upper section of the adjustment element (15b) more adjustment members are movable with respect to one another than in a lower section of the adjustment element (15b).

13. A lumbar support according to any one of the preceding claims,
**characterized in that**
each adjustment element (15, 15a, 15b) includes an undulating strip (55) that is bordered at each lateral edge by a rail (56, 57).

14. A lumbar support according to claim 13,
**characterized in that**
the rail (56, 57) includes incisions (58) and/or recesses (59) which ensure the movability of the adjustment members (60) with respect to one another.

15. A lumbar support according to claim 14,
**characterized in that**
the incisions (58) are formed on the one edge of the rail (56, 57) and the recesses (59) on the other edge of the rail.

## Revendications

1. Support lombaire pour un dossier de siège,
comportant une cage de support lombaire (10) qui est à disposer le long de la direction longitudinale du dossier de siège,
comportant un cadre (12) sur lequel la cage de support lombaire (10) est appliquée, et
comportant un dispositif de réglage (11) pour régler la courbure de la cage de support lombaire (10) par rapport au cadre (12), le dispositif de réglage (11) présentant plusieurs organes de réglage (60) qui sont partiellement mobiles les uns par rapport aux autres,
dans lequel le dispositif de réglage (11) présente au moins un élément de réglage (15, 15a, 15b) qui présente les plusieurs organes de réglage (60) partiellement mobiles les uns par rapport aux autres et est placé, à ses extrémités, dans des guidages et est ainsi couplé à un élément de traction (14) de telle sorte que lors de l'actionnement de l'élément de traction (14), les extrémités de l'au moins un élément de réglage (15, 15a, 15b) puissent se rapprocher pour courber l'au moins un élément de réglage (15, 15a, 15b) sur le plan convexe de sorte que l'au moins un élément de réglage courbé sur le plan convexe (15, 15a, 15b) appuie contre un côté arrière de la cage de support lombaire (10) pour régler la courbure de la cage de support lombaire (10), **caractérisé en ce que**
le dispositif de réglage présente deux éléments de réglage (15, 15a, 15b) qui présentent respectivement plusieurs organes de réglage (60), les deux éléments de réglage (15, 15a, 15b) étant respectivement liés l'un à l'autre à leurs extrémités.

2. Support lombaire selon la revendication 1,
**caractérisé en ce que**
les éléments de réglage (15, 15a, 15b) sont reliés à leurs deux extrémités à l'élément de traction (14) de telle sorte que par son actionnement, l'emplacement des organes de réglage (60) l'un par rapport à l'autre soit modifié au moins en partie.

3. Support lombaire selon la revendication 2,
**caractérisé en ce que**
l'élément de traction est un câble Bowden, le câble de traction (14) du câble Bowden étant placé à une extrémité des éléments de réglage et la gaine (16) pour le câble de traction (14) étant placée à l'autre extrémité des éléments de réglage.

4. Support lombaire selon au moins l'une des revendications précédentes,
**caractérisé en ce que**
la cage de support lombaire (10) est placée de façon à pouvoir pivoter, à l'une de ses extrémités sur le cadre (12), la deuxième extrémité pouvant s'écarter librement du cadre lors de l'actionnement du dispositif de réglage (11).

5. Support lombaire selon la revendication 3,
**caractérisé en ce que**
les deux extrémités des éléments de réglage (15, 15a, 15b) sont reliées au câble de traction du câble Bowden, tandis que les deux autres extrémités du câble Bowden sont reliées à la gaine (16) du câble Bowden.

6. Support lombaire selon la revendication 5,
**caractérisé en ce que**
lors de l'actionnement de l'élément de traction, un élément de réglage (15b) est courbé sur le plan convexe et l'autre élément de réglage (15a) est courbé sur le plan concave.

7. Support lombaire selon la revendication 5 ou la revendication 6,
**caractérisé en ce que**
l'un des éléments de réglage (15b) est placé sur le cadre (12) de telle sorte que les deux extrémités de cet élément de réglage soient mobiles par rapport au cadre.

8. Support lombaire selon la revendication 7,
**caractérisé en ce que**
l'élément de réglage (15a) placé sur le cadre (12) se courbe sur le plan concave lors de l'actionnement de l'élément de traction, l'autre élément de réglage (15b) se courbant sur le plan convexe.

9. Support lombaire selon la revendication 7 ou 8,
**caractérisé en ce que**
le dispositif de réglage est disposé dans la direction longitudinale du dossier de siège de façon à pouvoir pivoter.

10. Support lombaire selon l'une des revendications précédentes,
**caractérisé en ce que**
les éléments de réglage (15a, 15b) sont essentiellement parallèles au cadre (12) lorsque le dispositif de réglage (11) se trouve dans une première position de repos dans laquelle la cage de support lombaire (10) est essentiellement parallèle au cadre (12).

11. Support lombaire selon l'une des revendications précédentes,
**caractérisé en ce que**
l'élément de réglage (15a) qui n'est pas fixé au cadre (12) est conçu de telle sorte que, vu d'une extrémité libre du dossier de siège, dans une partie supérieure de l'élément de réglage (15a), il n'y a pas plus d'organes de réglage qui sont mobiles les uns par rapport aux autres, que dans une partie inférieure de l'élément de réglage (15a).

12. Support lombaire selon l'une des revendications précédentes,
**caractérisé en ce que**
l'élément de réglage (15b) qui est fixé au cadre (12) est conçu de telle sorte que, vu d'une extrémité libre du dossier de siège, dans une partie supérieure de l'élément de réglage (15b), il n'y a pas plus d'organes de réglage qui sont mobiles les uns par rapport aux autres, que dans une partie inférieure de l'élément de réglage (15b).

13. Support lombaire selon l'une des revendications précédentes,
**caractérisé en ce que**
chaque élément de réglage (15, 15a, 15b) présente une bande ondulée (55) qui est limitée respectivement aux deux bords latéraux, par une traverse (56, 57).

14. Support lombaire selon la revendication 13,
**caractérisée en ce que**
la traverse (56, 57) présente des creux (58) et/ou des évidements (59) qui assurent la mobilité des éléments de réglage (60) les uns par rapport aux autres.

15. Support lombaire selon la revendication 14,
**caractérisé en ce que**
les creux (58) sont formés sur un bord de la traverse (56, 57) et les évidements (59) sont formés sur l'autre bord de la traverse.
